# EUROPEAN PATENT APPLICATION

(11) **EP 1 290 949 A1**
(43) Date of publication of application: **12.03.2003**
(21) Application number: 01932261.9
(22) Date of filing: 25.05.2001
(51) Int. Cl.: A23B 4/01

(54) **PASTEURIZED FISH FOODS HAVING FRESH FEEL AND FROZEN PRODUCTS THEREOF**

(30) Priority: 14.06.2000 JP 2000177764
(71) Applicant: Nippon Suisan Kaisha, Ltd., Tokyo 100-0004 (JP)
(72) Inventor: SUGIYAMA, Kiminori, C/O Nippon Suisan Kaisha, Ltd., Hachio--shi, Tokyo 192-0906 (JP); KORIYAMA, Tsuyoshi, C/O Nippon Suisan Kaisha, Ltd., Hachioji-Shi, Tokyo 192-0906 (JP); TAKAI, Kiyoshi,C/O Techn Center, Nippon Suisan KK, Tokyo 100-0004 (JP)
(74) Representative: Leson, Thomas Johannes Alois, Dipl.-Ing.
(86) International application number: JP0104382
(87) International publication number: WO01095734

(57) **Abstract**

A heat-sterilized or frozen seafood product having quality closer to that in a raw state thereof is provided.

The invention intends a heat-sterilized seafood product which maintains the same appearance, taste and texture as those in a raw state thereof, a frozen product of the same, and cooked foods using those products. The heat-sterilized seafood product of the invention is featured in that, as compared with a product boiled at the same heating temperature, an outer part of the heat-sterilized seafood product shows a lower degree of protein degeneration, and an inner part thereof shows a comparable or higher degree of protein degeneration; and/or drips generated when the heat-sterilized seafood product is frozen and then thawed are clear and have a low level of turbidity; and/or when the heat-sterilized seafood product is frozen and then thawed, a reduction of the yield, a change of the appearance, the number of bacteria, and an outflow of the taste substances are all small. The heat-sterilized seafood product is obtained by heat-sterilizing an seafood product by ohmic heating, preferably ohmic heating wherein the seafood product is heated with an aqueous solution employed as a medium, and more preferably ohmic heating wherein the seafood product is heated to a temperature of not lower than 60 °C but lower than 90 °C and the aqueous solution is heated to a temperature lower than the temperature of the seafood product by a range of not less than 0 °C but less than 25 °C.

## Description

### Technical Field

The present invention relates to a seafood product produced by a heating method using an ohmic heating apparatus with an aqueous solution employed as a medium.

### Background Art

Seafood products and processed food products are distributed in a cold or frozen state in many cases. When employing cold storage, however, the preservation period is relatively short due to the progressive reduction in freshness and proliferation of bacteria. Freezing is therefore employed for long period storage. In such a case, product quality deteriorates to a level far from that of the fresh product because of degradations that meat is subject to, e.g., degeneration caused by freezing and thawing, the weight is reduced to about 1/3 - 1/5 by an outflow of drips, and the taste is degraded by the loss of substances responsible for the good taste. When seafood products are heated by boiling or irradiation by far-infrared rays for sterilization or for preventing quality deterioration after freezing and thawing, the outer part of the seafood product is brought into an overheated condition while the inner part of the seafood product reaches a sufficient temperature. Thus, the heated product is qualitatively different from the fresh product because of the progress of protein degeneration, a great reduction of the weight, a significant change in texture, and so on.

Treating oysters, etc. by heating with gas or far-infrared rays is reported (see Japanese Patent Publication No. 3-11744 and Japanese Patent Laid-open Publication No. 62-100241) as an example of a method of preserving seafood products in a frozen state after carrying out primary heating for suppressing quality change of the frozen products after freezing and thawing. However, conventional heating methods utilizing gas, far-infrared rays, microwaves, boiling bath, steam, etc. have problems such as a lowering of the product yield due to shrinkage of the tissue caused by overheating of the outer portion of the seafood product, and a reduction in its softness and juicy texture.

### Disclosure of the Invention

It is therefore the object of the present invention to provide a frozen seafood product and a heat-sterilized seafood product, which have quality close to that of fresh products by utilizing a primary heating method which is able to maintain the quality of fresh perishable products. In other words, the object of the present invention is to provide a heat-treated seafood product or a frozen product of the same, which have quality closer to that in a raw state while the seafood product is sterilized under heating.

The gist of the present invention resides in a heat-sterilized seafood product and a frozen product of the same, which maintain the same appearance, taste and texture as those in a raw state.

The present invention has the feature that, as compared with a product boiled at the same heating temperature, the outer part of the product of the present invention shows a lower degree of protein degeneration, and an inner part thereof shows a comparable or higher degree of protein degeneration. In this case, the present invention resides in a heat-sterilized seafood product and a frozen product of the same, which maintain the same appearance, taste and texture as those in a raw state thereof, and in which as compared with a product boiled at the same heating temperature, an outer part of the product of the present invention shows a lower degree of protein degeneration, and an inner part thereof shows a comparable or higher degree of protein degeneration.

The present invention has the feature that drips generated when the heat-sterilized seafood product is frozen and then thawed are clear and have a low level of turbidity. In this case, the present invention resides in a heat-sterilized seafood product and a frozen product of the same, in which drips generated when the heat-sterilized seafood product is frozen and then thawed are clear and have a low level of turbidity; which maintain the same appearance, taste and texture as those in a raw state thereof; and preferably in which as compared with a product boiled at the same heating temperature, an outer part of the product of the present invention shows a lower degree of protein degeneration, and an inner part thereof shows a comparable or higher degree of protein degeneration.

The present invention has the teature that when the heat-sterilized seafood product is frozen and then thawed, it is possible to minimize the reduction of the yield, changes in the appearance, the number of bacteria, and outflow of good taste substances. In this case, the present invention resides in a heat-sterilized seafood product and a frozen product of the same, in which when the heat-sterilized seafood product is frozen and then thawed, it is possible to suppress a reduction of the yield, a change of the appearance, the number of bacteria, and an outflow of good taste substances; in which drips generated when the heat-sterilized seafood product is frozen and then thawed are clear and have a low level of turbidity; preferably which maintain the same appearance, taste and texture as those in a raw state thereof; and/or in which as compared with a product boiled at the same heating temperature, an outer part of the product of the present invention shows a lower degree of protein degeneration, and an inner part thereof shows a comparable or higher degree of protein degeneration.

The present invention is featured in heat-sterilizing a seafood product by ohmic heating, preferably ohmic heating wherein the seafood product is heated with an aqueous solution employed as a medium, and more preferably ohmic heating wherein the seafood product is heated to a temperature of not lower than 60 °C but lower than 90 °C and the aqueous solution is heated to a temperature ranging from 25 °C lower to 3 °C higher than the temperature of the seafood product. In this case, the present invention resides in a heat-sterilized seafood product and a frozen product of the same, which is obtained by heat-sterilizing an seafood product by ohmic heating, preferably ohmic heating wherein the seafood product is heated with an aqueous solution employed as a medium, and more preferably ohmic heating wherein the seafood product is heated to a temperature of not lower than 60 °C but lower than 90 °C and the aqueous solution is heated to a temperature ranging from 25 °C lower to 3 °C higher than the temperature of the seafood product; which maintain the same appearance, taste and texture as those in a raw state; preferably in which when the heat-sterilized seafood product is frozen and then thawed, it is possible to suppress a reduction of the yield, a change of the appearance, the number of bacteria, and outflow of good taste substances; and/or in which drips generated when the heat-sterilized seafood product is frozen and then thawed are clear and have a low level of turbidity; and/or in which as compared with a product boiled at the same heating temperature, an outer part of the product of the present invention shows a lower degree of protein degeneration, and an inner part thereof shows a comparable or higher degree of protein degeneration.

Furthermore, the present invention resides in a cooked food using the heat-sterilized seafood product and the frozen product of the same according to the present invention.

### Brief Description of The Drawings

Fig. 1 is a sectional view showing a heating apparatus for implementing an seafood product heating method according to one embodiment of the present invention.
Fig. 2 is a sectional view showing another example of the heating apparatus.
Fig. 3 is a sectional view taken along line A-A in Fig. 2.
Fig. 4 is a graph showing results of measuring the time required for heating an oyster to a temperature of 75 °C by ohmic heating and a temperature of an aqueous solution in the same heating process.
Fig. 5 is a graph showing results of measuring the heating time required for heating an oyster to a temperature of 85 °C by ohmic heating and the temperature of an aqueous solution in the same heating process.
Fig. 6 is a graph showing results of determining a degree of degeneration of an oyster due to the heating by measuring the salt solubility of protein (myofibrillar protein).
Fig. 7 is a graph showing results of determining the degree of degeneration of an oyster due to heating by measuring the activity of a digestive enzyme (amylase activity).
Fig. 8 is a graph showing results of measuring the heating time required for heating a prawn to a temperature of 75 °C by ohmic heating and the temperature of an aqueous solution in the same heating process.
Fig. 9 is a graph showing results of measuring a heating time required for heating a prawn to a temperature of 85 °C by ohmic heating and the temperature of an aqueous solution in the same heating process.
Fig. 10 is a graph showing the blanching temperature history (temperatures of a sea urchin product and an aqueous solution) with ohmic heating.
Fig. 11 is a graph showing the time required for heating a paste of *mentaiko* (salted roe of walleye pollack with chili) to a target temperature by ohmic heating.

### Best Mode for Carrying Out the Invention

Seafood products, to which the present invention is applied, are preferably ones whose tissues are relatively tender and have a high water content, so that even when thermally processed by ohmic heating, the heated seafood products, which maintain an appearance, taste and texture close to those in a fresh state thereof and show less quality change after freezing and thawing, can be obtained. Practical examples include shellfishes, shrimps and prawns, crabs, fish eggs, sea urchins, fishes boiled with soy, and other paste-like or liquid-state seafood products whose tissues are relatively tender and have a high water content.

The thermally processed seafood product and a frozen product of the same, which are heated by ohmic heating, but maintain an appearance, taste and texture close to those in a fresh state thereof and show a less quality change after freezing and thawing, can be eaten raw or after being subjected to secondary cooking such as frying, boiling and roasting. According to the present invention, even when a seafood product has been sterilized under heating to such an extent as satisfying a level in conformity with the Food Sanitation Act, the heat-sterilized seafood product has an appearance, taste and texture close to those in a fresh state thereof. Also, such product quality is still maintained after the heat-sterilized seafood product has been frozen and then thawed after a long-period frozen storage.

A preferable method of producing the heat-sterilized seafood product of the present invention is featured in heating a seafood product under such conditions as being able to produce the heat-sterilized seafood product in which, as compared with a product boiled at the same heating temperature, an outer part of the heat-sterilized seafood product shows a lower degree of protein degeneration, and an inner part thereof shows a comparable or higher degree of protein degeneration, more specifically under such a condition that a temperature of an aqueous solution is comparable to or below an internal temperature of the seafood product. A method of heating an seafood product under a condition that the temperature of the solution is comparable to the internal temperature of the seafood product is provided, for example, by immersing the seafood product in hot water at 85 °C. It is, however, preferable to heat the seafood product under a condition that the temperature of the aqueous solution is comparable to or below the internal temperature of the seafood product, than to heat the seafood product under a condition that the temperature of the aqueous solution is comparable to the internal temperature of the seafood product. To that end, the present invention employs a heating method that features the supply of electric power to a mixture of the seafood product and a aqueous solution from electrodes, and heating the seafood product with heat generated by an electric current flowing through the seafood product. This ohmic heating method can easily heat the mixture of the seafood product and the aqueous solution under the condition that the temperature of the aqueous solution is comparable to or below the internal temperature of the seafood product.

The temperatures of the seafood product and the solution are controlled based on the initial temperature, electrical conductivity, and applied voltage. This heating method is capable of producing the heat-sterilized seafood product in which overheating of the surface of the seafood product is suppressed so that degrees of overheating and resultant degeneration of an outer part of the seafood product are kept low. Also, even a seafood product having thick meat can be heated from its inner part by the ohmic heating. It is therefore possible to increase the temperature rising rate to a very high value, and to thoroughly heat the inner part.

More specifically, when the seafood product is heated to a temperature of not lower than 60 °C but lower than 90 °C, the temperature of the aqueous solution is set to be between 3 °C higher and 25 °C lower than the temperature of the seafood product. Preferably, the temperature of the seafood product is set to fall in the range of 65 - 85 °C. If the temperature of the seafood product is 65 °C or below, the inner part of the seafood product would not be sufficiently heated, and if it is 85 °C or above, degeneration due to the heating would be overly progressed, resulting in a reduction of freshness feeling.

In practice, the seafood product is heated by placing electrodes on both surfaces of a water tank, putting a mixture of water and the seafood product in the tank, and supplying electric power to the mixture from the electrodes. Considering practical production, continuous heating is also possible by flowing the mixture of water and the seafood product through a pipe, and supplying electric power to the mixture from electrodes provided on an inner wall surface of the pipe.

An embodiment of the present invention will be described below with reference to the accompanying drawings.

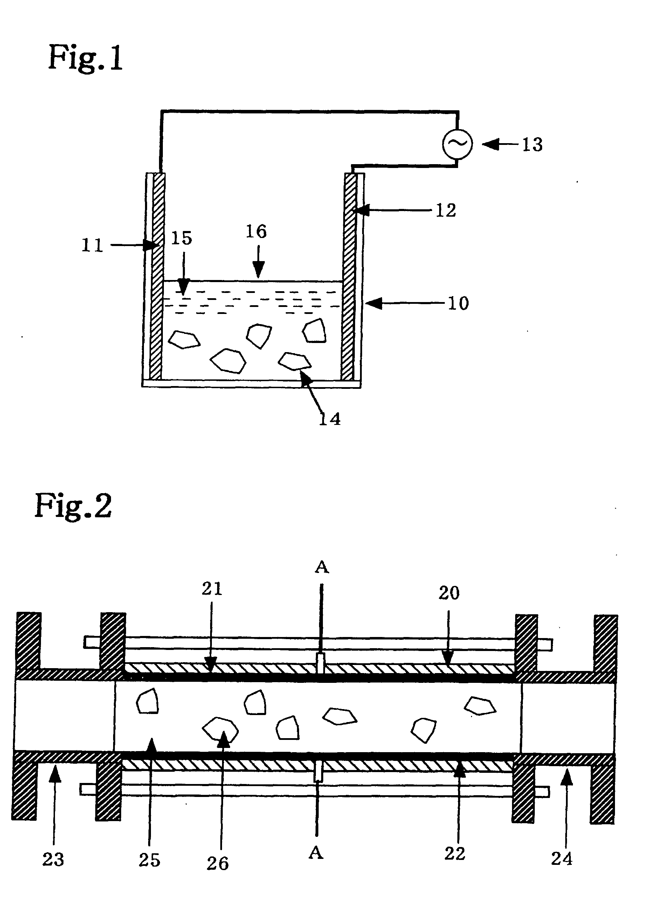

Fig. 1 is a sectional view of a heating apparatus for use in one example of the method of producing the heat-sterilized seafood product of the present invention. The heating apparatus comprises a heating container 10 in the form of a rectangular parallel pipes, and has plate-like electrodes 11, 12 provided on inner surfaces of two side walls in an opposing relation. The electrodes 11, 12 are connected to a power supply unit 13, which comprises a commercial power supply or a high-frequency power supply for supplying electric power.

A seafood-product and water mixture 16 including an seafood product 14 to be heat-treated and an aqueous solution 15 is supplied to the heating container 10. Then, electric power is supplied from the power supply unit 13 to the electrodes 11, 12. When the electric power is supplied to the electrodes 11, 12, an electric current flows through the seafood-product and water mixture 16 because it is in a condition contacting the electrodes 11, 12. Accordingly, Joule heat is generated in the seafood-product and water mixture 16 and the seafood product 14 is heated.

With the generated Joule heat, the interior of the seafood product 14 is sufficiently heated so as to develop a sterilizing action. At the same time, due to the heating, protein of the seafood product 14 is degenerated, enzymes are made inactive, and good taste components and nutrients are made fixed. As a result, the taste of the seafood product is maintained after thawing from a frozen state.

When heating the seafood-product and water mixture 16 with Joule heat, the heating temperature of the aqueous solution 15 of the seafood-product and water mixture 16 can be set comparable to or lower than that of the seafood product 14 by controlling the current flowing through the seafood product 14 to become comparable to or greater than that flowing through the aqueous solution 15. The temperature control of the seafood product 14 and the aqueous solution 15 is carried out by adjusting the salt concentration of the aqueous solution 15, electrical conductivity, applied voltage, and initial temperature. As a result, overheating of the surface of the seafood product 14 can be avoided.

The heating condition is set such that the core temperature of the seafood product 14 is in the range of about 60 °C - 90 °C, and preferably not lower than 65 °C but lower than 85 °C. If the core temperature of the seafood product 14 is lower than 65 °C, the sterilizing effect would be insufficient, the number of live bacteria would remain at a high level, and a maintained taste would be quickly deteriorated after thawing from a frozen state or after restoration. On the other hand, if the seafood product 14 is overly heated, the tissue would shrink, the consumer would feel that the food was hard and crumbled when eating the meat, and the water and good taste components would flow out of the seafood product 14. With the conventional boiling heating, it takes 3 - 10 minutes for the core temperature of an seafood product to reach 75 °C when the heating temperature is about 100 °C, and the yield is reduced down to about 40 % - 70 %. By contrast, the heating method of the present invention provides a very high yield of 60 % - 100 %. Also, because properties such as salt concentration and electrical conductivity should be changed depending on the type of the seafood product 14, it is required to adjust the applied voltage and the salt concentration and electrical conductivity of the aqueous solution 15 depending on the type of the seafood product 14.

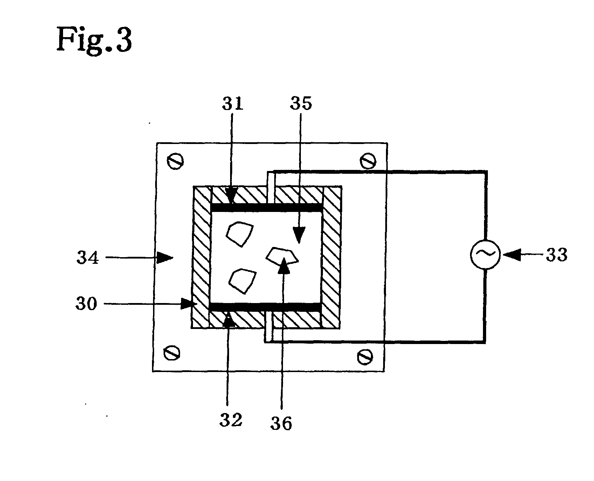

Figs. 2 and 3 show another embodiment of the heating apparatus for use in one example of the method of producing the heat-sterilized seafood product of the present invention. The above-described embodiment represents the case where the treatment of heating the seafood-product and water mixture 16 is performed as batch processing, while this embodiment represents the case where the heat treatment is performed as continuous processing.

The heating apparatus of this embodiment includes a heating pipe 20, 30 having a rectangular section and made of an insulating material such as a resin. Electrodes 21, 22; 31, 32 are provided on twos of four inner surfaces of the pipe 20, 30 which are positioned in an opposing relation. As with the above-described embodiment, the electrodes 21, 22; 31, 32 are connected to a power supply unit 33. Joint members 23, 24; 34 are attached to both ends the pipe 20, 30. One joint member 23 is disposed on the upstream side, and the other joint member 24 is disposed on the downstream side. The seafood-product and water mixture 16 is supplied to the heating pipe 20, 30 through a guide pipe.

In that type of heating apparatus, a plurality of heating pipes 20, 30 may be connected to each other through the joint members 23, 24; 34, Also, the heating pipe 20, 30 may be circular in cross section. Rather than flat plate electrodes, ring-shaped electrodes may be used such that the electrodes are disposed on the pipe at predetermined intervals. When seafood products 26, 36 are heated by supplying the seafood- product and water mixture to flow through the heating pipe 20, 30, a heating time is set depending on a flow rate of the seafood-product and water mixture through the heating pipe 20, 30.

When freezing the seafood product thus heat-treated for storage and then thawing it after a certain period of time, a seafood product is obtained which has quality in appearance, taste and feeling when eaten closer to that of a non-frozen fresh product than a product frozen without being heat-treated. This result is related to the fact that good taste components, nutrients and enzymes are made fixed in the seafood product due to degeneration of an inner part of the seafood product under the heating, and after thawing from a frozen state, the amount of drips and the amounts of good taste components and nutrients contained in the drips are smaller than those in the non-heat-treated seafood product. Also, it is thought that the tender internal tissue of the seafood product is degenerated under the heating to become more resistant to freezing.

On the other hand, since a degree of heating degeneration in an outer part of the seafood product is kept relatively low by controlling the temperature of the aqueous solution, a freshness feeling is maintained when eaten from the sensory point of view.

As a result of the heating step described above, a seafood product is sterilized to such an extent as satisfying a level in conformity with the Food Sanitation Act, and good taste components and nutrients in the seafood product are made fixed to a certain degree, whereby a good taste is maintained and an appearance and texture close to those in a fresh state can be obtained because overheating of the seafood product is avoided. Further, these effects are maintained even after freezing and thawing.

A seafood product heated by ohmic heating keeps an appearance, taste and texture close to those in a fresh state thereof, and therefore a thermally processed seafood product having a less change in quality after freezing and thawing can be obtained.

The term "ohmic heating" means heating made by utilizing the fact that when an electric current is applied to flow through a material against electrical resistance thereof. The ohmic heating was employed for bread crumb with electrodes in the past, and has recently been employed for blanching vegetables and fruits (in US) and heating fish-flesh products (in Japan). The ohmic heating can be performed by a simple apparatus comprising only a pair of electrodes and a power supply. Minimum requirements needed for materials to be handled by the ohmic heating are just such that the materials are capable of flowing an electric current at least to some extent through them. The ohmic heating has features that the material generates Joule heat in itself and heating progresses from the interior of the material during a conduction period. Therefore, a temperature difference between inner and outer parts of the material is less liable to occur than conventional other heating methods, and uniform heating can be achieved up to the inner part. An additional feature is that heat quickly reaches the inner part of even a material having thick meat and hence overheating of the outer part thereof is less likely to occur.

According to the ohmic heating, a seafood product having an appearance, taste and texture close to those in a fresh state thereof can be provided even when it has been sterilized under heating to such an extent as satisfying a level in conformity with the Food Sanitation Act. Also, such product quality is still maintained even after the heat-sterilized seafood product has been frozen and then thawed after a long-period of frozen storage.

Stated otherwise, ohmic heating using an ohmic heating apparatus enables seafood products, such as fishes and shellfishes, to be heated and sterilized while maintaining quality close to that of those products in a fresh state. Particularly, the ohmic heating used in the present invention is featured in that an outer part of an seafood product is less subjected to overheating and shows a low degree of degeneration due to heating, while an inner part of the seafood product is surely heated and shows a comparable or higher degree of degeneration to or than that of a boiled product. This feature makes it possible to avoid the meat collapsing after freezing and thawing, to suppress a reduction of taste and flavor, and to maintain a freshness feeling. The advantageous effect of the present invention gives a very important contribution to the fields of food industry and fishery industry.

The present invention will be described in detail in connection with examples. It is to be noted that the present invention is in no way limited to the following examples.

### Examples 1 - 2 and Comparative Examples 1 - 2

A heating and frozen storage test of oysters was conducted using the heating container 10 as shown in Fig. 1. The heating container 10 was sized such that four sides each have a width dimension of 95 mm. As oysters 14, 150 g of commercially available ones for cooking with heating were used. As an aqueous solution 15, 300 ml of fresh water was used for setting electrical conductivity to a low level.

By applying a voltage of 200 V between the electrodes 11 and 12 for electrical conduction, the current value was gradually increased with the elapse of time.

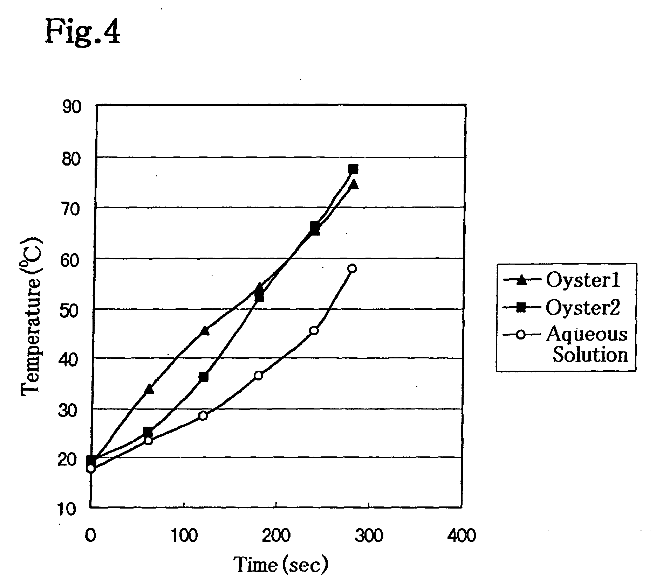

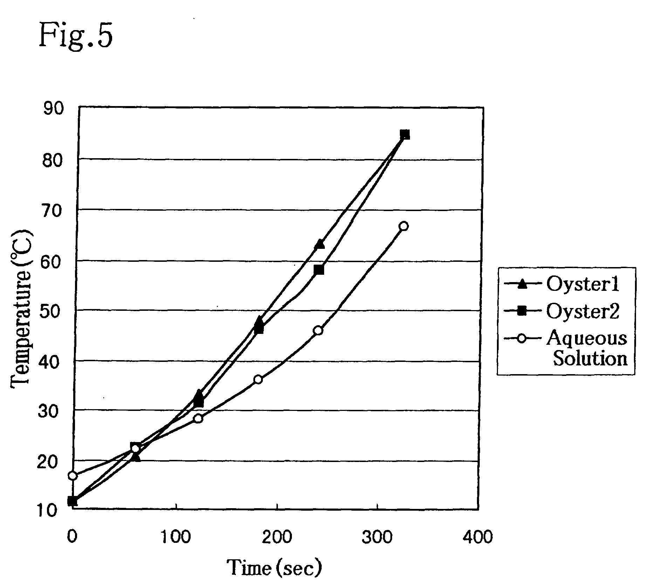

A tip of a temperature sensor was stuck into the oyster 14, and a tip of another temperature sensor was immersed in the aqueous solution 15. In such a condition, the heating times required for the temperature of the oyster 14 to reach 75 °C (Example 1, indicated by "Electrical Conduction 75" or "Ohmic Heating 75) and to reach 85 °C (Example 2, indicated by "Electrical Conduction 85" or "Ohmic Heating 85), and the temperature of the aqueous solution 15 at that time were measured. Measured results are shown in graphs of Figs. 4 and 5. In these graphs, the oyster 14 is represented by "Oyster 1" and "Oyster 2", and the aqueous solution 15 is represented by "Aqueous Solution". As will be seen from Figs. 4 and 5, a temperature difference between the oyster temperature and the aqueous solution temperature is kept at about 20 °C.

After completion of the electrical conduction, the oysters 14 were put in a basket to separate an oyster and water mixture 16 after being subjected to the heating into the oysters 14 and the aqueous solution 15. The yield was then calculated from a change in weight of the oysters 14 between before and after the heating.

Further, after the heating, the oysters 14 were put into a retort pouch, cooled down to about 15 °C with running water, and then frozen in a freezer at - 20 °C. Subsequently, after storing the oysters 14 in a frozen state for two weeks at - 20 °C, the oysters 14 were thawed at room temperature under air blowing and the yield was calculated by measuring the weight of the oysters 14.

As Comparative Examples, oysters were heated in a boiled water bath until the temperature of the oyster reached 75 °C (Comparative Example 1, indicated by "Boiled 75") and 85 °C (Comparative Example 2, indicated by "Boiled 85"). Then, changes of the oyster weight were measured between before and after the heating and after thawing from a frozen state. Also, as another Comparative Example, a change in weight of non-heated oysters was measured after thawing from a frozen state (Comparative Example 3, "Non-heated").

Resultant data of the yield, the number of bacteria, and sensory evaluation for the oysters 14 after the heat treatment are listed in Table 1 given below.

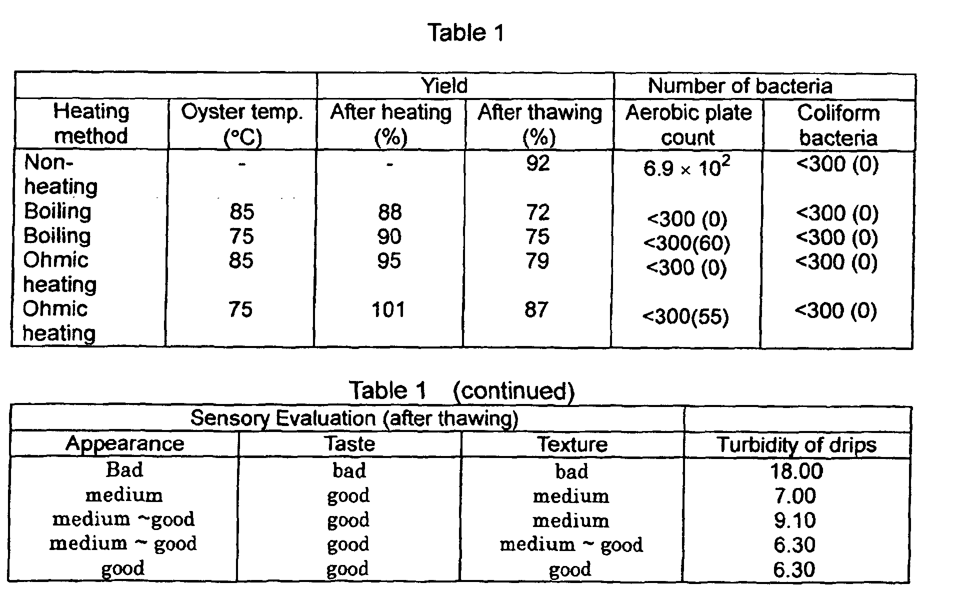

The oysters heated by the ohmic heating had higher yields after the heating and thawing than those heated by boiling, and maintained an appearance, taste and texture close to those of not-frozen raw oysters. In the case of heating the oysters by boiling, at the time when an inner part of the oyster reached 75 °C and 85 °C, the oyster surface reached a higher temperature than the inner part. As a result, shrinkage of the tissue at the oyster surface, an outflow of drips, and a change in texture were more noticeable than in the ohmic-heated oyster. By contrast, in the case of heating the oysters by the ohmic heating, the change of the oyster surface was small and an appearance and texture close to those of raw oysters were obtained.

The yield of the oysters 14 having been frozen and then thawed after each process of the heat treatment was higher than that of the oysters boiled at the same temperature. Particularly, the oysters having been ohmic-heated at 75 °C had the yield comparable to that of the non-heated and frozen oysters, and showed substantially the same appearance, taste and texture close as those of non-frozen raw oysters.

The number of bacteria in the oyster 14 having been subjected to each process of the heat treatment was measured. Although bacteria were apparently found in the non-heated oyster, the number of bacteria in the ohmic-heated oyster 14 was reduced down to a level comparable to that of the boiled oyster.

Drips after thawing from a frozen state had a lower turbidity in the conduction-heated oyster 14 than in the non-heated oyster, and also had a lower viscosity.

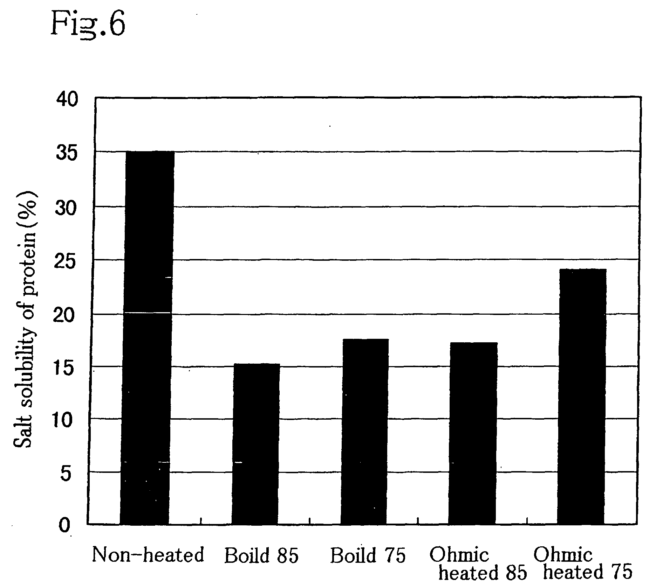

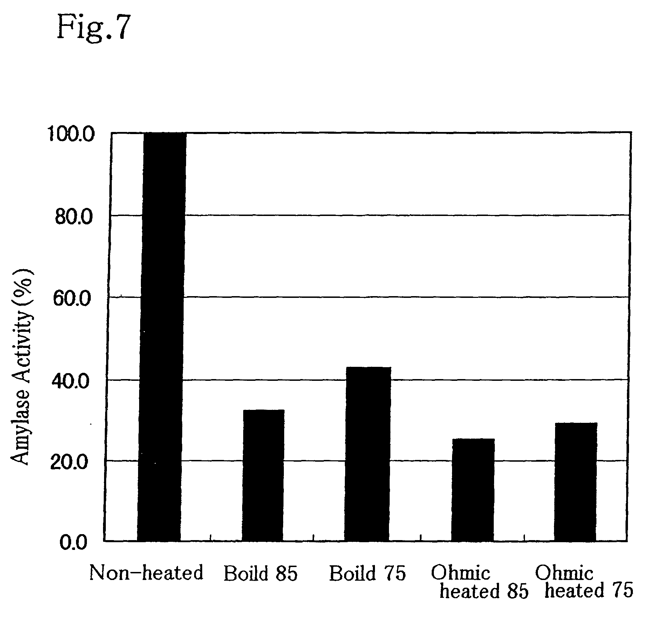

To confirm a degree of degeneration due to heating in those examples, a test of measuring salt solubility of protein (myofibrilar protein) and a test of measuring activity of a digestive enzyme (amylase activity) were made. Respective test results are shown in Figs. 6 and 7.

The salt solubility of protein shown in Fig. 6 represents one of the general indices indicating a degree of degeneration due to heating of myofibrillar protein such as myosin. The salt solubility of protein was higher in the ohmic heated oysters than in the boiled oysters. This result suggests that a degree of degeneration due to heating of the myofibrillar protein present in the outer part of the oyster is relatively low. Amylase is a typical digestive enzyme contained in oysters and can be suitably used to determine a degree of degeneration due to heating in the inner part of the oyster because it has low resistance against heat.

As shown in Fig. 7, the amylase activity was lower in the ohmic heated oysters than in the boiled oysters. This result suggests that a degree of degeneration due to heating in the inner part of the oyster is relatively high. Thus, the feature of the ohmic heated oyster was confirmed in that the inner part is surely heated, while overheating of the outer part is avoided.

The temperatures of the seafood product 14 and the aqueous solution 15 can be controlled by adjusting the salt concentrations (electrical conductivity) of the seafood product 14 and the aqueous solution 15, and the applied voltage. Control results are listed in Table 2 given below.

**Table 2**

| Aqueous solution | Voltage (V) | Heating time (min) | Oyster temp. (°C) | Aqueous solution temp. (°C) | Yield after heating (%) |
|---|---|---|---|---|---|
| Fresh water | 165 | 8 | 74 | 60 | 87 |
| 0.3% Brine | 165 | 4 | 75 | 82 | 73 |
| 1.0% Brine | 165 | 2.5 | 75 | boiling | 66 |
| Fresh water | 262 | 2.3 | 75 | 76 | 79 |

As seen from Table 2, when fresh water is used, the temperature of the aqueous solution 15 rises more slowly, and at the end of the heating process, the temperature of the aqueous solution 15 is lower than that of the oyster 14. Therefore, the outer part of the oyster can be prevented from overheating. The higher the salt concentration, the lower is the electrical resistance of the aqueous solution 15 than that of the oyster 14 and the faster is a temperature rise of the aqueous solution 15. Overheating of the outer part of the oyster, therefore, occurs at the higher salt concentration. Accordingly, when overheating of the surface of the oyster 14 should be avoided by making the temperature of the oyster 14 higher than that of the aqueous solution 15, it is preferably to use water having a lower salt concentration than the oyster 14, and more preferably to use fresh water.

Further, it was confirmed that the temperature control of the seafood product 14 and the aqueous solution 15 is also affected by the applied voltage.

By thus heating the oyster 14 on condition that the heating temperature of the oyster 14 is held lower than that of the aqueous solution 15, the inner part of the oyster 14 is primarily heated up to a sufficiently high temperature, while overheating of the surface of the oyster 14 is avoided. As a result, the surface of the oyster 14 has an appearance and texture close to those of raw oysters. The yield was also higher when using fresh water than using brine.

### Examples 3 - 4 and Comparative Examples 4 - 6

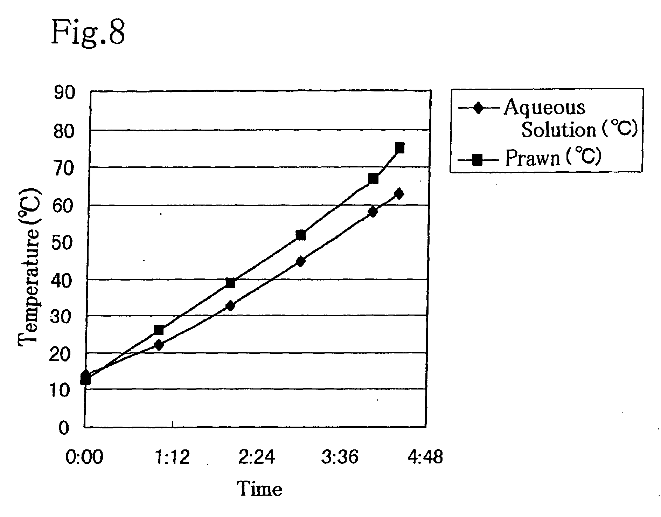

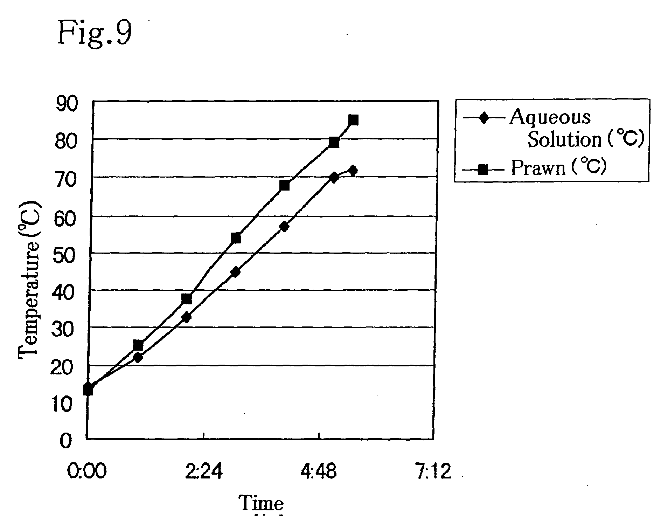

A heating and frozen storage test of prawns was conducted using the ohmic heating apparatus in a similar manner to Example 1. The heads and shells of live prawns were removed, and 100 g of resulting naked prawns were used as the seafood products 14. As the aqueous solution 15, 200 ml of fresh water was used. By applying a voltage of 200 V between the electrodes 11 and 12 for electrical conduction, the current value was gradually increased with the elapse of time. A tip of a temperature sensor was inserted into the prawn 14, and a tip of another temperature sensor was immersed in the aqueous solution 15. In such a condition, the heating times required for the temperature of the prawn 14 to reach 75 °C (Example 3) and to reach 85 °C (Example 4), and the temperature of the aqueous solution 15 at that time were measured. Measured results are shown in graphs of Figs. 8 and 9. As will be seen from Figs. 8 and 9, a temperature difference between the prawn temperature and the aqueous solution temperature is kept at about 10 °C.

After completion of the electrical conduction, the prawns 14 were put in a basket to separate a prawn and water mixture 16 after being subjected to the heating into the prawns 14 and the aqueous solution 15. The yield was then calculated from a change in weight of the prawns 14 between before and after the heating.

Further, after the heating, the prawns 14 were put into a retort pouch, cooled down to about 15 °C with running water, and then frozen in a freezer at - 20 °C. Subsequently, after storing the prawns 14 in a frozen state for two weeks at - 20 °C, the prawns 14 were thawed at the room temperature under air blowing and the yield was calculated by measuring the weight of the prawns 14.

As Comparative Examples, prawns were heated in a boiled water bath until the temperature of the prawn reached 75 °C (Comparative Example 4, indicated by "Boiled 75") and 85 °C (Comparative Example 5, indicated by "Boiled 85"). Then, changes of the prawn weight were measured between before and after the heating and after thawing from a frozen state. Also, as another Comparative Example, a change in weight of non-heated prawns was measured after thawing from a frozen state (Comparative Example 6, "Non-heated").

Resultant data of the yield, the number of bacteria, and sensory evaluation for the prawns 14 after the heat treatment are listed in Table 3 given below.

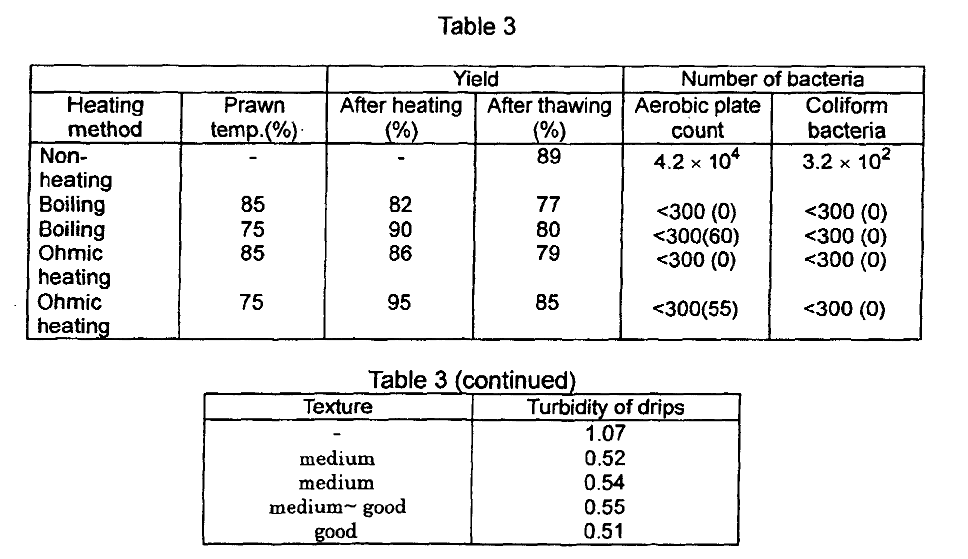

The prawns heated by the ohmic heating had higher yields after the heating and thawing than those heated by boiling, and maintained a better texture. In the case of heating the prawns by boiling, at the time when an inner part of the prawn reached 75 °C and 85 °C, the prawn surface reached a higher temperature than the inner part. As a result, shrinkage of the tissue at the prawn surface, an outflow of drips, and a change in texture were more noticeable than in the ohmic heated prawn.

The yield of the prawns 14 having been frozen and then thawed after each process of the heat treatment was higher than that of the prawns boiled at the same temperature. The number of bacteria in the prawn 14 having been subjected to each process of the heat treatment was measured. Although bacteria were apparently found in the non-heated prawn, the number of bacteria in the ohmic heated prawn 14 was reduced down to a level comparable to that of the boiled prawn. Drips after thawing from a frozen state had a lower turbidity in the ohmic heated prawn 14 than in the non-heated prawn, and also had a lower viscosity.

### Example 5 and Comparative Examples 7 - 10

A heating and frozen storage test of sea urchins was conducted using the ohmic heating apparatus in a similar manner to Example 1.

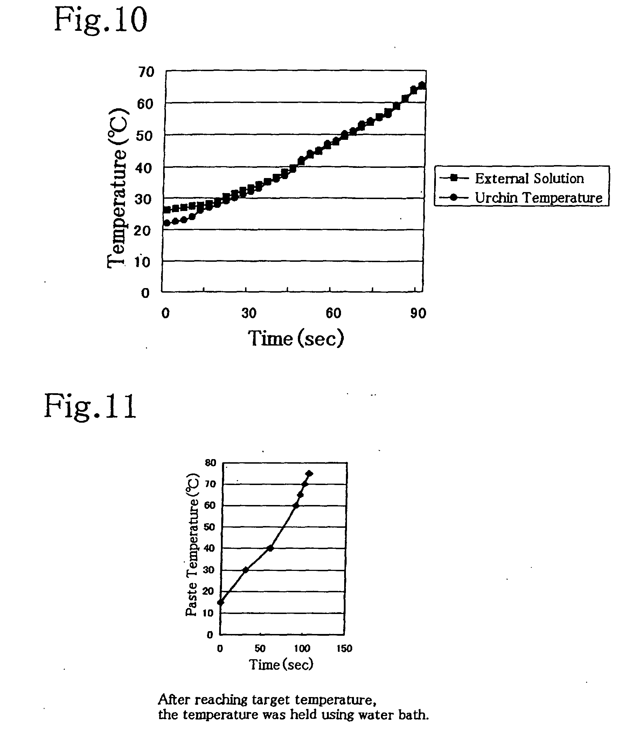

In these examples, 50 g of sea urchins were used as the seafood products 14, and 200 ml of fresh water was used as the aqueous solution 15. By applying a voltage of 400 V between the electrodes 11 and 12 for electrical conduction, the current value was gradually increased with time. The tip of a temperature sensor was inserted into the naked sea urchin 14, and the tip of another temperature sensor was immersed in the aqueous solution 15. Heating conditions were set such that the heating time required for the temperature of the naked sea urchin 14 to reach 65 °C was about 90 seconds, and there is no significant temperature difference between the temperature of the naked sea urchin 14 and the temperature of the aqueous solution 15 (Fig. 10). After completion of the electrical conduction, a naked sea urchin and water mixture 16 after being subjected to the heating was separated into the naked sea urchins 14 and the aqueous solution 15. The yield was then calculated from a change in weight of the naked sea urchins 14 between before and after the heating. Further, after the heating, the naked sea urchins 14 were put in iced water for cooling down to about 15 °C, and then frozen in a freezer at - 30 °C (Example 5). Subsequently, after storing the naked sea urchins 14 in a frozen state for two weeks at - 20 °C, the naked sea urchins 14 were thawed at the room temperature under air blowing and the yield was calculated by measuring the weight of the naked sea urchins 14. In addition, to determine a degree of collapse of the eggs shape, the naked sea urchins 14 were washed in a 3 % brine solution for 30 seconds, and the yield after washing was measured from the amount of remaining solid eggs.

As Comparative Examples, a similar evaluation was made for non-heated sea urchins (Comparative Example 7), alum-treated sea urchins which were immersed in a solution containing 2 % alum and 3 % saline solution for 30 minutes (Comparative Example 8), boiled sea urchins which were heated in a boiled water bath until the temperature of a core part of the naked sea urchin reached 65 °C (Comparative Example 9), and steamed sea urchins which were heated by steaming until the temperature of a core part of the naked sea urchin reached 65 °C (Comparative Example 10). For the non-heated sea urchins and the ohmic heated sea urchins, the yield was also measured in a similar manner after storing them in a frozen state at - 20 °C and - 10 °C for two months and after storing them in a cold state at 5 °C for 10 days.

Results of the yield, the yield after washing, and sensory evaluation for the naked sea urchins 14 after the treatment are listed in Table 4 given below.

As compared with the alum-treated sea urchins, the boiled sea urchins and the steamed sea urchins, the ohmic heated sea urchins had higher yields after the heating, thawing and washing, and hardly showed collapse of the eggs shape. Also, as compared with the boiled sea urchins and the steamed sea urchins, the ohmic heated sea urchins maintained not only a stronger raw texture, but also taste and flavor specific to raw sea urchins. The boiled sea urchins and the steamed sea urchins did not show collapse of the eggs shape, but provided a feeling of crumbling of eggs and a poorer taste when eaten because of tissue shrinkage caused by overheating. The non-heated sea urchins and the alum-treated sea urchins maintained a taste of raw sea urchins, but showed collapse of the eggs shape to such an extent that egg grains were lost and an appearance was deteriorated. Drips after thawing from a frozen state had a lower turbidity in the ohmic heated sea urchins, the boiled sea urchins and the steamed sea urchins than in the non-heated sea urchins, and also had a lower viscosity.

Table 5 lists results of sensory evaluation (bitter) of the sea urchins during the frozen storage, and Table 6 lists results of a degree of collapse of egg shape (yield after washing).

As will be seen from Table 5, the non-heated sea urchins produced a bitter taste in about one week of the storage. By comparison, the occurrence of a bitter taste in the ohmic heated sea urchins was greatly suppressed. The bitter taste of the non-heated sea urchins was gradually increased with the elapse of the storage period.

As will be seen from Table 6, the ohmic heated sea urchins hardly showed the collapse of eggs shape throughout the preservation period. By comparison, the non-heated sea urchins showed a significant collapse of eggs shape in an initial stage of the frozen storage period, and the collapse of eggs shape had a tendency to increase with the elapse of the storage period.

Table 7 lists evaluation results of taste of the sea urchins during the frozen storage, and Table 8 lists changes in collapse of eggs shape during the frozen storage. No foul smell was produced in the ohmic heated sea urchins even after the storage of 10 days. By comparison, the non-treated sea urchins and the alum-treated sea urchins produced foul smell in about 3 or 5 days. Also, the ohmic heated sea urchins maintained the eggs shape even after the storage of 10 days. By comparison, the non-treated sea urchins and the alum-treated sea urchins have begun dissolution during the storage of 10 days.

**Table 4**

| | | Yield change | | | Sensory evaluation | | |
|---|---|---|---|---|---|---|---|
| | Sample | After treatment (%) | After thawing (%) | After washing (%) | Appearance | Texture | Taste |
| Com. | Non- | 100 | 94 | 53 | Bad | bad | medium |
| Ex . 7 | heating | | | | | | |
| Com. | Steaming | 103 | 100 | 96 | medium | bad | bad |
| Ex. 10 | Ohmic | | | | | | |
| Com. | heating | 116 | 110 | 105 | good | good | good |
| Ex. 5 | | | | | | | |
| Com. | Alum | 105 | 101 | 74 | bad | bad | bad |
| Ex. 8 | | | | | | | |
| Com. | Boiling | 96 | 83 | 80 | bad | bad | bad |
| Ex. 9 | | | | | | | |

**Table 5**

| Sample | Preservation days | | | | |
|---|---|---|---|---|---|
| | 5 | 13 | 30 | 45 | 60 |
| Non-heated sea urchins preserved at - 20°C | Δ | × | ×2 | ×2 | ×3 |
| Non-heated sea urchins preserved at - 10°C | Δ | × | ×2 | ×3 | ×4 |
| Ohmic heated sea urchins preserved at - 20°C | ○ | ○ | ○ | ○ | Δ |
| Ohmic heated sea urchins preserved at -10°C | ○ | ○ | ○ | × | × |
| *O: no bitter taste Δ: slightly bitter ×: bitter ×2: very bitter ×3: very bitter and sour smell ×4: very bitter and unable to eat | | | | | |

**Table 6**

| Sample | Preservation days | | | | |
|---|---|---|---|---|---|
| | 5 | 13 | 30 | 45 | 60 |
| Non-heated sea urchins preserved at - 20°C | 75 | 74 | 62 | 53 | 62 |
| Non-heated sea urchins preserved at - 10°C | 75 | 71 | 67 | 71 | 62 |
| Ohmic heated sea urchins preserved at | 99 | 106 | 97 | 92 | 101 |
| - 20°C | | | | | |
| Ohmic heated sea urchins preserved at | 98 | 100 | 103 | 99 | 100 |
| - 10°C | | | | | |
| * Yield after washing (%) | | | | | |

**Table 7**

| Sample | Preservation days | | | | |
|---|---|---|---|---|---|
| | 0 | 1 | 3 | 5 | 10 |
| Non-heated sea urchins | ○ | ○ | Δ | × | × |
| Alum-treated sea urchins | ○ | ○ | ○ | Δ | × |
| Ohmic heated sea urchins | ○ | ○ | ○ | ○ | ○ |
| *○ : delicious taste Δ : slight foul smell × : foul smell and unable to eat | | | | | |

**Table 8**

| Sample | Preservation days | | | | |
|---|---|---|---|---|---|
| | 0 | 1 | 3 | 5 | 10 |
| Non-heated sea urchins | 100 | 92 | 80 | 75 | 60 |
| Alum-treated sea urchins | 100 | 95 | 82 | 79 | 68 |
| Ohmic heated sea urchins | 108 | 105 | 102 | 102 | 103 |
| * Yield after washing (%) | | | | | |

### Examples 6 - 8 and Comparative Example 11

These examples intend to clarify effects upon quality, sterilization, etc. of a paste of *mentaiko* (salted roe of walleye pollack with chili) when the ohmic heating is applied to the *mentaiko* paste.

### Method)

Sample: A sample was prepared by mixing 1.83 % of salted roe of walleye pollack, 20 % of PO-20, 4 % of vinegar for cooking, 1 % of sodium acetate, 1 % of salad oil, 1 % of monosodium glutamate, 0.82 % of YE400, 0.00 % of Red102, 0.05 % of gardenia, and 0.30 % of Minit S.

Ohmic Heating: 500 g of *mentaiko* paste was put as the seafood product 14 in the ohmic heating apparatus. By applying a voltage of 60 V between the electrodes 11 and 12 for electrical conduction, the current value was gradually increased with time. The tip of a temperature sensor was stuck into the *mentaiko* paste 14, and a heating time of about 90 - 95 seconds was determined until the temperature of the *mentaiko* paste 14 reached 60 - 65 °C (Fig. 11). After reaching the target temperature, the *mentaiko* paste 14 was held at that temperature for 10 - 20 minutes. (Examples 6, 7 and 8)

Control Product: As Comparative Example, the *mentaiko* paste was packed and then heated by boiling (65 °C, 40 minutes) (Comparative Example 11).

Table 9 lists evaluation results of the color tone, texture, and sterilization of the *mentaiko* paste after the treatment. In Comparative Example 11 wherein the *mentaiko* paste 14 was heated by the current method, i.e., boiling, the color tone changed to white with degeneration of pollack roe due to the heating, and a feeling of hard and crumbling touch was produced felt when eaten. Thus, the color tone and texture were far from those of raw pollack roe. As compared with Comparative Example 11, the ohmic heated *mentaiko* paste showed a less change in the color tone and maintained a strong texture close to that of raw pollack roe (small increase of the hard and crumbling touch). The lower the temperature to which the heated *mentaiko* paste reached and the shorter the time during which the *mentaiko* paste was held at the reached temperature after the heating, the less was affected quality of the *mentaiko* paste. Taking into account Table 10, it is understood that the visually observed results are substantially coincident with measured results using a color difference meter. As to bacteria in the *mentaiko* paste, the ohmic heating under conditions in these Examples showed a sterilizing ability comparable to that obtained by boiling.

### Review)

Because of boiling being external heating, when the *mentaiko* paste 14 is heated by boiling, heat is transmitted from the outer side and it takes about 15 - 20 minutes for the core temperature of the *mentaiko* paste 14 to reach 60 °C or above. It is therefore believed that an outer part of the *mentaiko* paste 14 is overheated, whereby the color tone and texture are remarkably changed. By comparison, when the *mentaiko* paste 14 is heated by the ohmic heating as with these Examples, a time required for the core temperature of the *mentaiko* paste 14 to reach 60 °C or above is about 90 seconds, and a temperature difference between inner and outer parts of the mentaiko paste is also small. As a result, a quality change attributable to degeneration under the heating is suppressed.

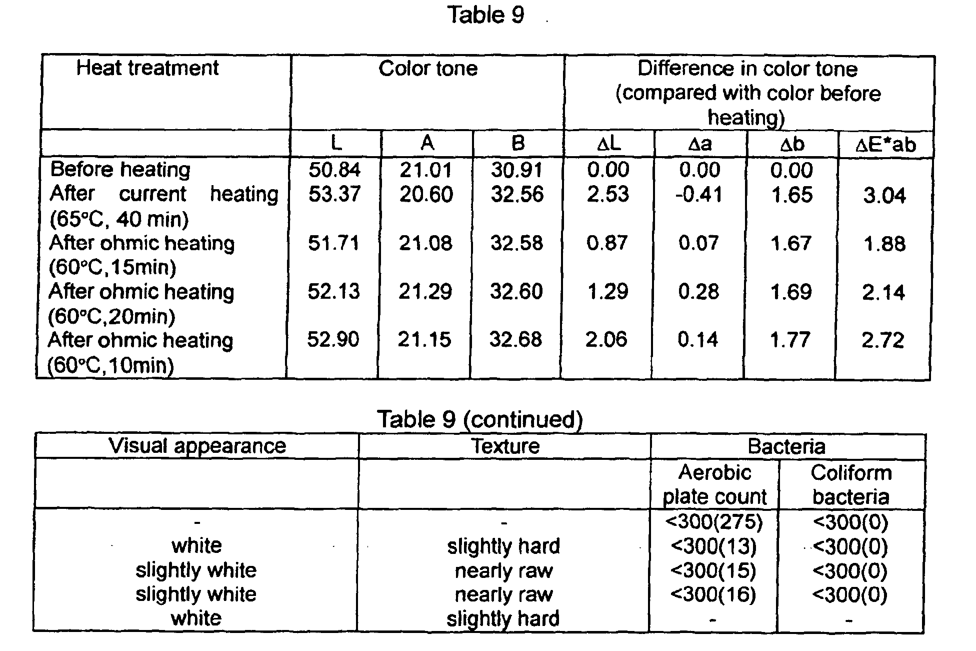

**Table 10**

| Color tone evaluation expression | ΔE*ab |
|---|---|
| Very slight difference | 0∼0.5 |
| Slight difference | 0.5∼1.5 |
| Appreciable difference | 1.5∼3.0 |
| Significant difference | 3.0∼6.0 |
| Very significant difference | 6.0-12.0 |
| Another color system | 12.0 or above |

### Industrial Applicability

According to the present invention, a seafood product can be thoroughly sterilized by heating up to its core while preventing overheating of a surface and an inner part of the seafood product. Since the surface of the seafood product is prevented from being overheated, the surface of the seafood product after the heating can maintain an appearance close to that in a raw state thereof, and a soft feeling close to those in a raw state is also kept when eating the seafood product. Further, since good taste components are made fixed in the seafood product by the heating, those good taste components are avoided from flowing out as drips after the seafood product is thawed from a frozen state, and a good taste can be maintained. Moreover, a reduction in weight of the seafood product after the heating and after thawing from a frozen state is suppressed, thus resulting in a higher yield.

In addition, for seafood products, such as oysters and sea urchins, which generate a bitter taste during frozen storage, the ohmic heating develops an effect of suppressing the occurrence of a bitter taste. As to sea urchins, the ohmic heating develops an effect of preventing the collapse of eggs shape during and after cold storage, frozen storage and thawing without treatment using drugs such as alum.

## Claims

1. A heat-sterilized seafood product which maintains the same appearance, taste and texture as those in a raw state thereof.

2. A heat-sterilized seafood product according to Claim 1, wherein as compared with a product boiled at the same heating temperature, an outer part of the heat-sterilized seafood product shows a lower degree of protein degeneration, and an inner part thereof shows a comparable or higher degree of protein degeneration.

3. A heat-sterilized seafood product according to Claim 1 or 2, wherein drips generated when the heat-sterilized seafood product is frozen and then thawed are clear and have a low level of turbidity.

4. A heat-sterilized seafood product according to Claim 1, 2 or 3, wherein when the heat-sterilized seafood product is frozen and then thawed, a reduction of the yield, a change of the appearance, the number of bacteria, and an outflow of good taste substances are all small.

5. A heat-sterilized seafood product according to any one of Claims 1 to 4, wherein the heat-sterilized seafood product is obtained by heat-sterilizing an seafood product by ohmic heating.

6. A heat-sterilized seafood product according to Claim 5, wherein the seafood product is heated by ohmic heating with an aqueous solution employed as a medium.

7. A heat-sterilized seafood product according to Claim 6, wherein the ohmic heating is performed such that the seafood product is heated to a temperature of not lower than 60 °C but lower than 90 °C and the aqueous solution is heated to a temperature lower than the temperature of the seafood product by a range of not less than - 3 °C but less than 25 °C.

8. A heat-sterilized seafood product according to any one of Claims 1 to 7, wherein the heat-sterilized seafood product is a frozen product.

9. A cooked food using a heat-sterilized seafood product according to any one of Claims 1 to 8.
